# EUROPEAN PATENT APPLICATION

(11) **EP 2 800 300 A1**
(43) Date of publication of application: **05.11.2014**
(21) Application number: 12863113.2
(22) Date of filing: 07.12.2012
(51) Int. Cl.: H04L 12/00

(54) **METHOD AND DEVICE FOR EVALUATING USER ACTIVITY LEVEL IN ANONYMOUS SOCIAL SYSTEM**

(30) Priority: 26.12.2011 CN 201110441094
(71) Applicant: Tencent Technology Shenzhen Company Limited, Shenzhen, Guangdong 518044 (CN)
(72) Inventor: WAN, Linjia, Shenzhen Guangdong 518044 (CN)
(74) Representative: Jansen, Cornelis Marinus
(86) International application number: PCT/CN2012/086170
(87) International publication number: WO 2013/097589

(57) **Abstract**

The present invention is applicable to the field of information processing and provides a method and apparatus for evaluating user activity in an anonymous social system. The method includes: configuring a status selection item in the anonymous social system and configuring at least two statuses for the status selection item, detecting the status selected by an user, determining an activity of the user in the anonymous social system according to the status selected and pushing a functional experience related to the activity to a client of the user. By the present invention, the push of the functional experience in the anonymous social system can be of more pertinence and higher accuracy, and has stronger real-time performance.

## Description

### Technical Field

The present invention relates to a field of information processing, and specifically, relates to a method and an apparatus for evaluating user activity in an anonymous social system.

### Background

There is an anonymous social system in existing social network services, e.g., an anonymous friend making system applied to an email or instant messenger and etc. The anonymous social system pushes to a user various functional experiences according to the user's activity including the user's interest on the anonymous social system, the user's using frequency of the anonymous social system and so on, e.g., it may deliver more anonymous information to the user having more interest on the anonymous friend making system so as to make information delivery with more pertinence.

In the prior art, the user's activity for the anonymous social system is evaluated by an integral method or analysis on the user's behaviors. However, it is difficult to evaluate if the user is historically active or recently active in the anonymous social system through the integral method, and the analysis on the user's behaviors has disadvantages of violation of the user's privacy, poor accuracy of the evaluation and low real-time performance.

### Summary of the Invention

### Technical Problems

Embodiments of the present invention is to provide a method for evaluating user activity in an anonymous social system to solve the above problem in evaluating a user's activity in the anonymous social system in the prior art.

### Technical Resolutions

An embodiment of the present invention is implemented as a method for evaluating user activity in an anonymous social system, and the method includes:
displaying in the anonymous social system a status selection item upon receiving a logon account and determining that the logon account logs on the anonymous social system, wherein the status selection item includes at least one status;
receiving a status selection instruction and obtaining a status corresponding to the status selection instruction;
matching an activity marker associated with the status to the status corresponding to the status selection instruction; and
obtaining corresponding application program information according to the matched activity marker and transmitting the obtained application program information to a client.

Another objective of the embodiment of the present invention is to provide a method for evaluating user activity in an anonymous social system, and the method includes:
displaying a status selection item in the anonymous social system, wherein the status selection item includes at least one status;
detecting the status an user selects through the status selection item; and
determining an activity of the user in the anonymous social system according to the status selected and pushing application program information related to the activity to a client of the user.

Another objective of the embodiment of the present invention is to provide an apparatus for evaluating user activity in an anonymous social system, and the apparatus includes:
a configuration unit, adapted to configure a status selection item in the anonymous social system and configure at least one status for the status selection item;
a detection unit, adapted to detect the status selected by an user; and
a determination unit, adapted to determine an activity of the user in the anonymous social system according to the status selected and pushing application program information related to the activity to a client of the user.

Another objective of the embodiment of the present invention is to provide an anonymous social system, and the system includes an apparatus for evaluating user activity in the anonymous social system which includes:
a configuration unit, adapted to configure a status selection item in the anonymous social system and configure at least one status for the status selection item;
a detection unit, adapted to detect the status selected by an user; and
a determination unit, adapted to determine an activity of the user in the anonymous social system according to the status selected and pushing application program information related to the activity to a client of the user.

Another objective of the embodiment of the present invention is to provide a storage medium, storing computer-executable instructions therein, wherein the computer-executable instructions are to enable a computer to perform the following operations:
displaying in the anonymous social system a status selection item upon receiving a logon account and determining that the logon account logs on the anonymous social system, wherein the status selection item includes at least one status;
receiving a status selection instruction and obtaining a status corresponding to the status selection instruction;
matching an activity marker associated with the status to the status corresponding to the status selection instruction; and
obtaining corresponding application program information according to the matched activity marker and transmitting the obtained application program information to a client.

### Technical Effects

It can be seen from the above technical solutions that through setting a status selection item with more than one status in the anonymous social system, the embodiments of the present invention can evaluate the user's activity in the anonymous social system according to the status the user selects, so that the delivery of the anonymous social system's functional experience can be of more pertinence and higher accuracy without violation of the user's privacy, thereby reducing interferences to inactive users and improving the user's satisfaction on the anonymous social system. In addition, whether the user is historically active or recently active can be determined according to the time when the user makes a selection, and thus the real-time performance is strong.

### Brief Description of Accompanying Drawings

Fig. 1 is a flow chart illustrating a method for evaluating user activity in an anonymous social system provided by a first embodiment of the invention.
Fig. 2 is a flow chart illustrating a method for evaluating user activity in an anonymous social system provided by a second embodiment of the invention.
Fig. 3 is a schematic diagram showing a structure of an apparatus for evaluating user activity in an anonymous social system provided by a third embodiment of the invention.

### Preferred Embodiments of the Invention

To make objectives, technical solutions and advantages of the present invention more clear and understandable, the present invention will be described more fully in combination with embodiments and the accompanying drawings. It should be understood that the specific embodiments described hereinafter are merely used to explain the present invention and are in no way intended to limit the present invention.

Through setting a status selection item with more than one status in an anonymous social system in the Internet, the embodiments of the present invention can evaluate the user's activity in the anonymous social system according to the status the user selects, so that the delivery of the anonymous social system's functional experience can be of more pertinence and higher accuracy without violation of the user's privacy, thereby reducing interferences to inactive users and improving the user's satisfaction on the anonymous social system. In addition, whether the user is historically active or recently active can be determined according to the time when the user makes a selection, and thus the real-time performance is strong.

The technical solution of the present invention is illustrated through the following description of the specific embodiments.

### Embodiment I:

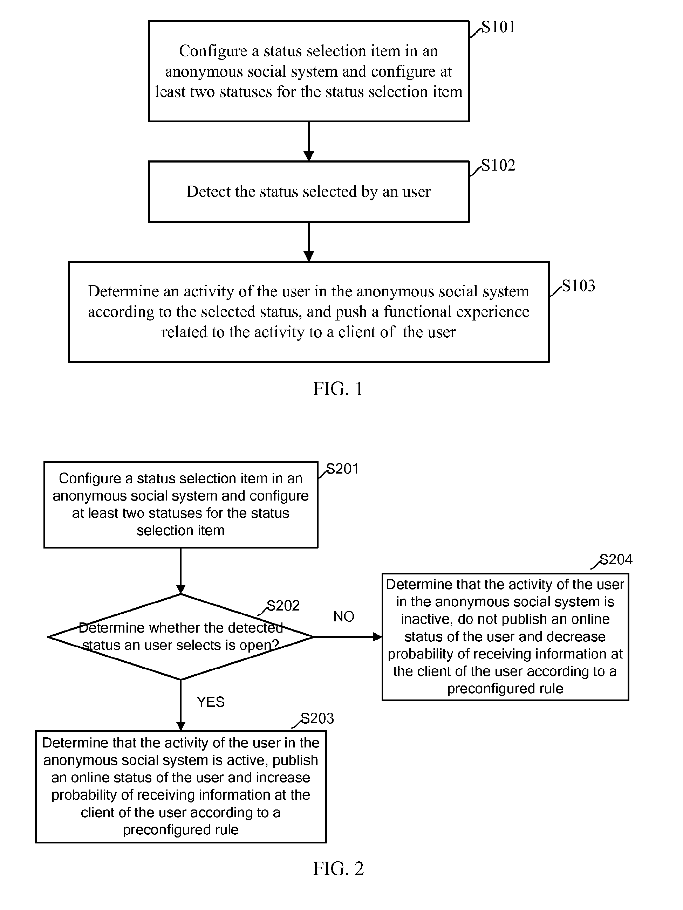

Fig. 1 shows a flow chart illustrating a method for evaluating user activity in an anonymous social system provided by a first embodiment of the invention. The procedure of the method is described in detail as follows:
In Step S101, a status selection item is configured in the anonymous social system, and more than one status is configured for the status selection item.

In the embodiment, the anonymous social system includes, but is not limited to, an anonymous friend making system applied to an email or instant messenger which may be located at a PC or a mobile terminal which includes, but is not limited to, a mobile phone and a tablet PC. The status selection item is associated with the anonymous social system and includes but is not limited to a form of a progress bar, a button, a selection box or automatic input. The status may include an open status, a close status or a set of adjustable discrete values.

Herein, the anonymous social system may include multiple status selection items, and an activity marker such as a flag bit is configured for a designated status selection item in a user property system of a server or a client. The activity marker is used to reflect the status of the status selection item, e.g., the activity marker includes a first activity marker such as 1 which indicates that the status of the status selection item is open, and it also includes a second activity marker such as 0 which indicates that the status of the status selection item is close.

In Step S102, the status selected by the user is detected.

In the embodiment, a server may obtain the status selected by the user through detecting the activity marker of the status selection item and automatically record the time when the selection is made. For example, when the activity marker is of the value of the first activity marker, 1, it is indicated that the status selected by the user is the open status.

In the embodiment, when the user logs on the anonymous social system by inputting a logon account and password and the anonymous social system determines that the logon account and password are correct, the system explains the function of the status selection item through tips and instructs the user to select a status through the status selection item.

In Step S103, the activity marker of the user in the anonymous social system is determined according to the selected status, and application program information such as the function for experience related to the activity marker is pushed to the client of the user.

In the embodiment, a correspondence relationship between the statuses and the activities markers is pre-established, e.g., when the selected status is the open status, the corresponding user activity is active, and otherwise, when the selected status is the close status, the corresponding user activity is inactive. In addition, when the status is a set of adjustable discrete values, the mapping relationship between the discrete values and activity levels is pre-established. In an example, but not limited to the example, when the discrete values of the statuses is a set {1,2,3,4} and the user's activity markers or activity levels include a first-level active marker, a second-level active marker, a third-level active marker, the mapping relationship between the discrete values and the activity markers is that when the selected status is 1 or 2, the user's corresponding activity marker is the first-level active marker, when the selected status is 3, the user's corresponding activity marker is the second-level active marker, and when the selected status is 4, the user's corresponding activity marker is the third-level active marker.

In the embodiment, the functional experience includes, but is not limited to, probability of receiving anonymous information and whether to publish the user's information, e.g., an online status and etc.

In the embodiment of the present invention, the user's activity in the anonymous social system can be evaluated according to the status the user selects, so that the delivery of the anonymous social system's functional experience can be of more pertinence and higher accuracy without violation of the user's privacy, thereby reducing interferences to inactive users, enabling delivery of stronger and more functional experiences to the users of high activity and improving the user's satisfaction on the anonymous social system. In addition, whether the user is historically active or recently active can be determined according to the time when the user makes a selection, and thus the real-time performance is strong.

### Embodiment II:

Fig. 2 shows a flow chart illustrating a method for displaying network map comments provided by a second embodiment of the invention. The procedure of the method is described in detail as follows:
In Step S201, a status selection item is configured in an anonymous social system, and more than one status is configured for the status selection item.

In Step S202, the status selected by the user is detected.

In the embodiment, Steps S201∼S202 are the same as Steps S101∼102, the specific implementation of which can be referred to the description of Steps S101∼102 in Embodiment I.

In Step S203, when the selected status is the open status, the user's activity in the anonymous social system is determined as active, the online status of the user is published, and the probability of receiving information at the client of the user is increased according to a preconfigured rule.

In Step S204, when the selected status is the close status, the user's activity in the anonymous social system is determined as inactive, the online status of the user will not be published, and the probability of receiving information at the client of the user is decreased according to a preconfigured rule.

In the embodiment, a default probability of receiving information is preconfigured in the system, and the probability of receiving information can be adjusted according to the preconfigured rule according to the status selected by the user. The description of the preconfigured rule is as follows but not limited to the following:
Duration of the status selected by the user is recorded.

When the status selected by the user is the open status, if the duration is 0-a1, the probability of receiving information is increased by b1 % from the default probability of receiving information; and if the duration is a1-a2, the probability of receiving information is increased by b2%; and the probability of receiving information is increased accordingly until the probability of receiving information reaches 100%.

When the status selected by the user is the close status, if the duration is 0-a1, the probability of receiving information is decreased by b1%; and if the duration is a1-a2, the probability of receiving information is decreased by b2%; and the probability of receiving information is decreased accordingly until the probability of receiving information is equal to 0%.

In another embodiment of the present invention, the method further includes: when the status is a set of adjustable discrete values, the system determines the user's activity level in the anonymous social system according to the discrete values selected by the user, control the probability of receiving information at the client of the user according to the user's activity level in the anonymous social system, and determines whether to publish the user's online status. Here, there is a mapping relationship between the discrete value and the activity level.

The description is as follows but not limited to the following:
When the discrete values of the statuses is a set {1,2,3,4} and the user's activity levels include levels of first-level active, second-level active and third-level active, the mapping relationship between the discrete values and the activity levels is that when the selected status is 1 or 2, the user's corresponding activity level is first-level active, when the selected status is 3, the user's corresponding activity level is second-level active, and when the selected status is 4, the user's corresponding activity level is third-level active. When the activity level is second-level active or an upper-level active, the online status of the user is published, and each activity level is configured with a value of the probability of receiving information. Those skilled in this art may configure the value of the probability according to experiences or according to the above duration of the selected status, and may adjust the value of the probability according to satisfaction information fed back by the user.

An example is provided hereinafter to describe the above procedure which is not limited to the example.

When the anonymous social system is applied to an email, status options configured for a beacon icon include an option of lightening the status selection item and an option of un-lightening the status selection item, and the status selection item may be displayed by lightening the beacon icon. When a user logs on the anonymous social system applied to the email, the system detects that the status selection item is lightened by the user, which indicates that the user's activity in the anonymous social system applied to the email is active. In order to push stronger and more functional experiences to the active user, a presentation system at front end of the anonymous social system applied to the email and a delivery system and receiving system backstage push stronger functional experiences, publish statuses including but not limited to the status selection item's lightening status and the user's online status, and gradually increase the probability of delivery of anonymous information which exceeds a first threshold configured initially and that of receipt of the anonymous information which exceeds a second threshold configured initially according to the duration of the lightening status. For example, it is determined whether the duration of the open status exceeds a preconfigured time threshold of 5 seconds, the transmission frequency of application information is increased if the duration of the open status exceeds the preconfigured time threshold of 5 seconds or not.

When it detects that the user does not lighten the status selection item, certain instructions may be provided for the user through tips. If the user still does not lighten the status selection item, it is indicated that the user's activity in the anonymous social system applied to the email is inactive. In order to reduce interferences to the user, the system does not publish the user's online status and gradually decreases the probability of delivery of anonymous information and that of receipt of the anonymous information at the user's client according to the duration of the status selection item's un-lightening status. Here, the first and second thresholds configured initially may be preconfigured by the user.

### Embodiment III:

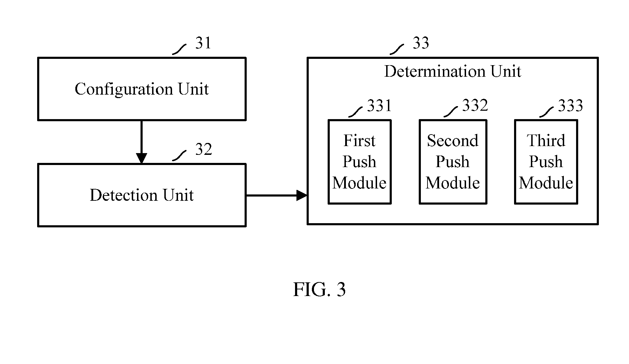

Fig. 3 shows a structure of an apparatus for evaluating user activity in an anonymous social system provided by a third embodiment of the invention which just shows component related to the embodiment of the present invention for the convenience of description.

The apparatus for evaluating user activity in the anonymous social system may be a software unit running in an information processing system not limited to the anonymous social system, or may be a hardware unit or a combination unit of a hardware unit and a software unit. Alternatively, the apparatus for evaluating user activity in the anonymous social system may be an independent add-on integrated in the information processing system or running in an application system of the information processing system.

The apparatus for evaluating user activity in the anonymous social system includes a configuration unit 31, a detection unit 32 and a determination unit 33. The specific functions of the units are as follows:
The configuration unit 31 is adapted to configure a status selection item in an anonymous social system and configure more than one status for the status selection item.

The detection unit 32 is adapted to detect a status selected by a user.

The determination unit 33 is adapted to determine an activity of the user in the anonymous social system according to the selected status, and push a functional experience related to the activity to a client of the user.

In the embodiment, the anonymous social system includes, but is not limited to, an anonymous friend making system applied to an email or instant messenger which may be located at a PC or a mobile terminal which includes, but is not limited to, a mobile phone and a tablet PC. The status selection item includes but is not limited to a form of a progress bar, a button, a selection box or automatic input. The status may include an open status, a close status or a set of adjustable discrete values.

The apparatus for evaluating user activity in the anonymous social system provided in the embodiment may be used in the aforementioned method for evaluating user activity in the anonymous social system, the specific description of which can be referred to the description of the method for evaluating user activity in the anonymous social system in Embodiment I and will not be discussed again herein.

In another embodiment of the present invention, the determination unit 31 further includes a first push module 331, a second push module 332 and a third push module 333.

The first push module 331 is adapted to when the selected status is an open status, determine that the activity of the user in the anonymous social system is active, publish the online status of the user and increase the probability of receiving information at the client of the user according to a preconfigured rule.

The second push module 332 is adapted to when the selected status is a close status, determine that the activity of the user in the anonymous social system is inactive, not publish the online status of the user and decrease the probability of receiving information at the client of the user according to a preconfigured rule.

The third push unit 333 is adapted to determine an activity level of the user in the anonymous social system according to the selected discrete value, control the probability of receiving information at the client of the user and determine whether to publish the online status of the user according to the activity level of the user in the anonymous social system, where there is a mapping relationship between the discrete value and the activity level.

The apparatus for evaluating user activity in the anonymous social system provided in the embodiment may be used in the aforementioned method for evaluating user activity in the anonymous social system, the specific description of which can be referred to the description of the method for evaluating user activity in the anonymous social system in Embodiment II. For example, the first push module 331 may further be adapted to obtain the duration of the open status such as 5 seconds, determine whether the duration of the open status exceeds a preconfigured time threshold of 5 seconds, and if the duration of the open status exceeds the preconfigured time threshold or not, increase the transmission frequency of application program information and etc., which will not be discussed again herein.

Those skilled in this art could understand that various units included in the apparatus of Embodiment III are divided according to functional logics, the division of the units is not limited to this, a division of the units may be adopted as long as the functions of apparatus can be realized through the division. In addition, the specific names of the functional units are merely to distinguish these units but not intended to limit the protection scope of the present invention.

Those skilled in this art could understand that implementation of all or a part of the procedure in the method of the above embodiments may be accomplished through related hardware being instructed by a computer program which may be stored in a computer-readable storage medium. When the program is executed, the program may include the above procedure in any of the above embodiments of the method. Here, the storage medium may be a magnetic disc, optical disk, Read-Only Memory (ROM) or Random Access Memory (RAM) or etc.

To sum up, through setting a status selection item configured with more than one status in certain anonymous social system in the Internet, the embodiments of the present invention can evaluate the user's activity in the anonymous social system according to the status the user selects, so that the delivery of the anonymous social system's functional experience can be of more pertinence and higher accuracy without violation of the user's privacy, thereby reducing interferences to inactive users, enabling delivery of stronger and more functional experiences to the users of high activity and improving the user's satisfaction on the anonymous social system. In addition, whether the user is historically active or recently active can be determined according to the time when the user makes a selection, and thus the real-time performance is strong.

The foregoing is only preferred embodiments of the present invention and is not used to limit the present invention. Any modification, equivalent substitution and improvement without departing from the spirit and principle of the present invention are within the protection scope of the present invention.

## Claims

1. A method for evaluating user activity in an anonymous social system, comprising:
displaying in the anonymous social system a status selection item upon receiving a logon account and determining that the logon account logs on the anonymous social system, wherein the status selection item comprises at least one status;
receiving a status selection instruction and obtaining a status corresponding to the status selection instruction;
matching an activity marker associated with the status to the status corresponding to the status selection instruction; and
obtaining corresponding application program information according to the matched activity marker and transmitting the obtained application program information to a client.

2. The method for evaluating user activity in the anonymous social system of claim 1, wherein the status comprises an open status or a close status, the open status corresponds to a first activity marker, and the close status corresponds to a second activity marker.

3. The method for evaluating user activity in the anonymous social system of claim 2, wherein a specific step for obtaining corresponding application program information according to the matched activity marker and transmitting the obtained application program information to a client comprises:
when the matched activity marker is the first activity marker, displaying information of the open status and increasing probability of receiving the application program information according to a preconfigured rule; and
when the matched activity marker is the second activity marker, decreasing probability of receiving the application program information according to a preconfigured rule.

4. The method for evaluation user activity in the anonymous social system of claim 3, wherein when the matched activity marker is the first activity marker, the method further comprises the following steps:
obtaining a duration of the open status and determining whether the duration of the open status exceeds a preconfigured time threshold; and
increasing transmission frequency of the application program information when the duration of the open status exceeds the preconfigured time threshold or not.

5. The method for evaluating user activity in the anonymous social system of claim 1, wherein the status comprises at least one identifier corresponding to the activity marker, and the activity marker corresponds to probability of receiving information.

6. The method for evaluating user activity in the anonymous social system of claim 5, wherein during obtaining corresponding application program information according to the matched activity marker and transmitting the obtained application program information to a client, the method further comprises the following steps:
obtaining probability of receiving information corresponding to the matched activity marker according to the matched activity marker; and
transmitting the application program information to the client according to the obtained probability of receiving information.

7. A method for evaluating user activity in an anonymous social system, comprising:
displaying a status selection item in the anonymous social system, wherein the status selection item comprises at least one status;
detecting the status an user selects through the status selection item; and
determining an activity of the user in the anonymous social system according to the status selected and pushing application program information related to the activity to a client of the user.

8. The method for evaluating user activity in the anonymous social system of claim 7, wherein the status comprises an open status or a close status.

9. The method for evaluating user activity in the anonymous social system of claim 8, wherein a process for determining an activity of the user in the anonymous social system according to the status selected and pushing application program information related to the activity to a client of the user specifically comprises:
when the status selected is the open status, determining that the activity of the user in the anonymous social system is a first activity marker, publishing an online status of the user and increasing probability of receiving information at the client of the user according to a preconfigured rule; and
when the status selected is the close status, determining that the activity of the user in the anonymous social system is a second activity marker and decreasing probability of receiving information at the client of the user according to a preconfigured rule.

10. The method for evaluating user activity in the anonymous social system of claim 9, wherein when the status selected is the open status, the method further comprises:
obtaining a duration of the open status and determining whether the duration of the open status exceeds a preconfigured time threshold; and
increasing transmission frequency of the application program information when the duration of the open status exceeds the preconfigured time threshold or not.

11. The method for evaluating user activity in the anonymous social system of claim 7, wherein the status is a set of adjustable discrete values.

12. The method for evaluating user activity in the anonymous social system of claim 11, wherein a process of determining an activity of the user in the anonymous social system according to the status selected and pushing application program information related to the activity to a client of the user specifically comprises:
determining an activity level of the user in the anonymous social system according to the discrete value selected, controlling probability of receiving information at the client of the user and determining whether to publish an online status of the user according to the activity level of the user in the anonymous social system, wherein there is a mapping relationship between the discrete value and the activity level.

13. An apparatus for evaluating user activity in an anonymous social system, comprising:
a configuration unit, adapted to configure a status selection item in the anonymous social system and configure at least one status for the status selection item;
a detection unit, adapted to detect the status selected by an user; and
a determination unit, adapted to determine an activity of the user in the anonymous social system according to the status selected and pushing application program information related to the activity to a client of the user.

14. The apparatus for evaluating user activity in an anonymous social system of claim 13, wherein the status comprises an open status or a close status.

15. The apparatus for evaluating user activity in the anonymous social system of claim 14, wherein the determination unit comprises:
a first push module, adapted to when the status selected is the open status, determine that the activity of the user in the anonymous social system is a first activity marker, publish an online status of the user and increase probability of receiving information at the client of the user according to a preconfigured rule; and
a second push module, adapted to when the status selected is the close status, determine that the activity of the user in the anonymous social system is a second activity marker and decrease probability of receiving information at the client of the user according to a preconfigured rule.

16. The apparatus for evaluating user activity in the anonymous social system of claim 15, wherein the first push module is further adapted to obtain a duration of the open status and determine whether the duration of the open status exceeds a preconfigured time threshold, and increase transmission frequency of the application program information when the duration of the open status exceeds the preconfigured time threshold or not.

17. The apparatus for evaluating user activity in the anonymous social system of claim 13, wherein the status is a set of adjustable discrete values.

18. The apparatus for evaluating user activity in the anonymous social system of claim 17, wherein the determination unit further comprises a third push module, determine an activity level of the user in the anonymous social system according to the discrete value selected, control probability of receiving information at the client of the user and determining whether to publish an online status of the user according to the activity level of the user in the anonymous social system, wherein there is a mapping relationship between the discrete value and the activity level.

19. An anonymous social system, comprising an apparatus for evaluating user activity in the anonymous social system, the apparatus comprising:
a configuration unit, adapted to configure a status selection item in the anonymous social system and configure at least one status for the status selection item;
a detection unit, adapted to detect the status selected by an user; and
a determination unit, adapted to determine an activity of the user in the anonymous social system according to the status selected and pushing application program information related to the activity to a client of the user.

20. A storage medium, storing computer-executable instructions therein, wherein the computer-executable instructions are to enable a computer to perform the following operations:
displaying in the anonymous social system a status selection item upon receiving a logon account and determining that the logon account logs on the anonymous social system, wherein the status selection item comprises at least one status;
receiving a status selection instruction and obtaining a status corresponding to the status selection instruction;
matching an activity marker associated with the status to the status corresponding to the status selection instruction; and
obtaining corresponding application program information according to the matched activity marker and transmitting the obtained application program information to a client.

21. The storage medium of claim 20, wherein the status comprises an open status or a close status, the open status corresponds to a first activity marker, and the close status corresponds to a second activity marker.

22. The storage medium of claim 21, wherein the computer-executable instructions are further to enable the computer to perform the following operations:
when the matched activity marker is the first activity marker, displaying information of the open status and increasing probability of receiving the application program information according to a preconfigured rule; and
when the matched activity marker is the second activity marker, decreasing probability of receiving the application program information according to a preconfigured rule.

23. The storage medium of claim 22, wherein the computer-executable instructions are further to enable the computer to perform the following operations:
obtaining a duration of the open status and determining whether the duration of the open status exceeds a preconfigured time threshold; and
increasing transmission frequency of the application program information when the duration of the open status exceeds the preconfigured time threshold or not.

24. The storage medium of claim 20, wherein the status comprises at least one identifier corresponding to the activity marker, and the activity marker corresponds to probability of receiving information.

25. The storage medium of claim 24, wherein the computer-executable instructions are further to enable the computer to perform the following operations:
obtaining probability of receiving information corresponding to the matched activity marker according to the matched activity marker; and
transmitting the application program information to the client according to the obtained probability of receiving information.
